# EUROPEAN PATENT APPLICATION

(11) **EP 4 760 908 A1**
(43) Date of publication of application: **17.06.2026**
(21) Application number: 25831204.0
(22) Date of filing: 18.06.2025
(51) Int. Cl.: H01M 50/204, H01M 50/256, H01M 50/262, H01M 10/42

(54) **RACK FOR STORING BATTERY CELL AND BATTERY CELL STORAGE DEVICE COMPRISING SAME**

(30) Priority: 20.06.2024 KR 20240080489
(71) Applicant: LG Energy Solution, Ltd., Seoul 07335 (KR)
(72) Inventor: HONG, Hae Ji, Daejeon 34122 (KR)
(74) Representative: Goddar, Heinz J.
(86) International application number: PCT/KR2025/008440
(87) International publication number: WO 2025/263994

(57) **Abstract**

Disclosed herein relates to a battery cell storage device including: a tray; and a rack for loading the tray, wherein the rack includes: a plurality of pockets provided with vertical partition walls; a rotary plate configured to rotate clockwise and/or counterclockwise; and a tray fixing member coupled to the rotary plate and configured to fix the tray stored inside the pocket, wherein the rotary plate is installed on the vertical partition walls.

## Description

### [Technical field]

This application claims the benefit of Korean Patent Application No. 10-2024-0080489, filed on June 20, 2024, the disclosure of which is incorporated herein by reference.

The present disclosure relates to a rack for storing a battery cell and a battery cell storage device including the same.

### [Background]

Recently, interest in energy storage technology has been growing steadily. As its applications expand to include mobile phones, camcorders, notebook PCs, and even electric vehicles, research and development efforts in energy storage technology are becoming increasingly concrete. Batteries are the most prominent field in this regard, with the development of rechargeable lithium-ion secondary batteries being a particular focus of attention.

The assembly of a typical lithium-ion secondary battery involves alternately stacking a positive electrode, a porous separator, and a negative electrode. This stack is then inserted into a can or pouch of a specific size and shape, and electrolyte is injected. The electrolyte, introduced later, permeates into the spaces between the positive electrode, negative electrode, and separator due to capillary force.

Secondary batteries undergo a pre-aging process where the electrolyte is filled to a certain level and the cells are left at room temperature for approximately three days. The pre-aging process is performed before the activation process to improve the wetting of the electrolyte on the electrode assembly. Additionally, aging processes occur intermittently during the activation process of the secondary battery.

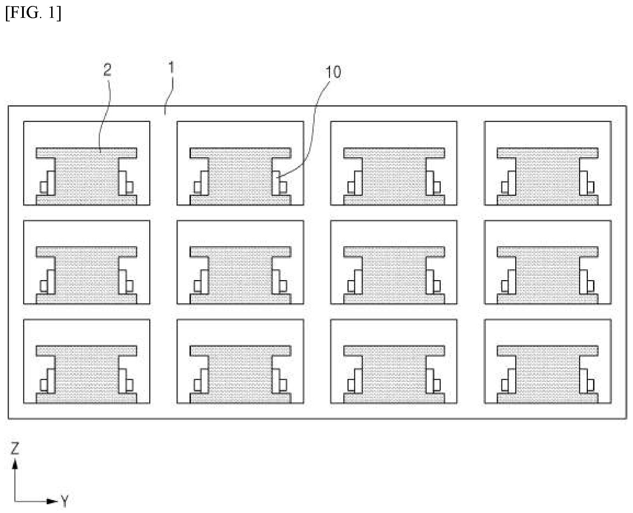

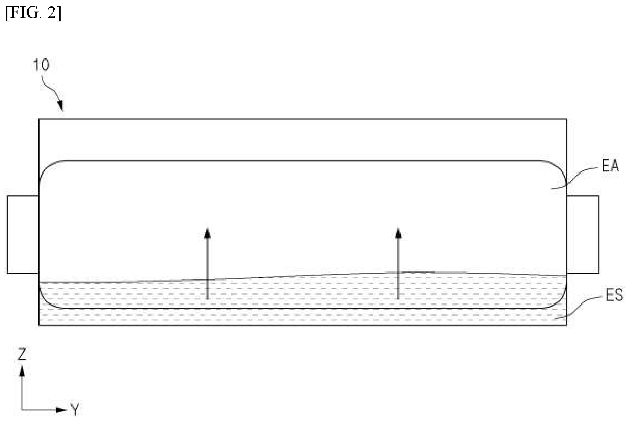

FIG. 1 is a diagram illustrating a storage rack for battery cells according to conventional technology. Conventionally, the pre-aging process was performed with battery cells 10 stored in a tray 2, and the tray 2 containing the battery cells 10 stacked in both the horizontal (Y-direction) and vertical (Z-direction) directions on a rack 1. According to this conventional technique, as shown in FIG. 2, the electrolyte solution (ES) pools at the lower part of the battery cell 10. The electrolyte solution at the lower part then rises via capillary force through the separator, positive electrode plate, and negative electrode plate, permeating up to the upper part of the electrode assembly (EA). Here, the lower part and upper part are defined relative to the Z-direction.

However, due to material characteristics, wetting of the electrodes and separator by the electrolyte solution requires considerable time and demanding process conditions. Particularly for battery cells that have undergone high-temperature pressurization processes, the separator and electrodes are already tightly bonded, often resulting in poor electrolyte solution wetting. Waiting for sufficient electrolyte solution wetting across all areas inevitably leads to low productivity.
Patent Document 1 discloses an aging device and method for secondary battery cells to improve electrolyte solution wetting. However, the configuration of the device is highly complex and suffers from poor spatial efficiency.
(Patent Document 1) Korean Patent Publication No. 10-2020-0042800

### [Summary]

### [Technical Problem]

The technical problem that the technical idea of the present disclosure seeks to solve is to provide a storage rack for battery cells and a battery cell storage device that can improve the wetting efficiency of the electrolyte solution while having a non-complex device configuration and excellent space efficiency.

### [Technical Solution]

According to exemplary embodiments of the present disclosure, a rack for loading battery cell trays is provided.

The rack includes:
a plurality of pockets provided with vertical partition walls;
a rotary plate configured to rotate clockwise and/or counterclockwise; and
a tray fixing member coupled to the rotary plate and configured to fix a tray stored within the pocket, wherein
the rotary plate is installed on the vertical partition wall.

According to other exemplary embodiments of the present disclosure, a battery cell storage device is provided.

The battery cell storage device includes:
a tray configured to store a battery cell; and
a rack for loading the tray, wherein
the rack comprises:
   a plurality of pockets formed with vertical partition walls;
   a rotary plate configured to rotate clockwise and/or counterclockwise; and
   a tray fixing member coupled to the rotary plate and configured to fix the tray stored inside the pocket, wherein
   the rotary plate is installed on the vertical partition walls.

In exemplary embodiments, the rotational axis of the rotary plate is parallel to a first direction (Y-direction).

In exemplary embodiments, each pocket is provided with a pair of first and second rotary plates, wherein the first rotary plate is installed on a vertical partition wall on one side of the first direction (Y-direction), and the second rotary plate is installed on a vertical partition wall on the other side of the first direction (Y-direction).

In exemplary embodiments, the tray fixing member is ring-shaped.

In exemplary embodiments, the rotary plate is configured to be able to be coupled to the vertical partition wall and separable from the vertical partition wall.

In exemplary embodiments, a plurality of tray fixing members is provided on a single rotary plate, wherein the plurality of tray fixing members is spaced apart from each other along a second direction (X-direction).

In exemplary embodiments, the pocket has a structure in which the upper part and/or lower part is open.

In exemplary embodiments, the tray fixing member is positioned at a height allowing the tray to rotate within the pocket.

In exemplary embodiments, the tray includes:
a bottom part;
first and second side walls perpendicular to the bottom part and facing each other; and
an upper frame located at the upper part of the first and second side walls and having a frame shape with an open center.

In exemplary embodiments, the tray fixing member is configured to be fastened to the upper frame and/or the bottom part.

### [Advantageous Effects]

According to the embodiments of the present disclosure, the wetting efficiency of the electrolyte solution is improved, thereby reducing the time required for aging.

### [Brief Description of the Drawings]

FIG. 1 is a diagram showing a storage rack for battery cells according to the prior art.
FIG. 2 is a schematic diagram illustrating the wetting method of the electrolyte solution according to the prior art.
FIG. 3 is a front view of a rack according to exemplary embodiments of the present disclosure.
FIG. 4 is a top view of a rack according to exemplary embodiments of the present disclosure.
FIG. 5 is an enlarged perspective view of a pocket at the dotted line portion of the rack shown in FIG. 3.
FIG. 6 is a diagram showing a tray fixing member according to another embodiment of the present disclosure.
FIG. 7 is a view showing the rotary plate rotated clockwise.
FIG. 8 is a view showing the rotary plate rotated counterclockwise.
FIG. 9 is a side view of a battery cell illustrating the effect of the present disclosure.
FIG. 10 is a front view of a battery cell storage device according to exemplary embodiments of the present disclosure.
FIG. 11 is a top view of a battery cell storage device according to exemplary embodiments of the present disclosure.
FIG. 12 is a front view of a tray according to exemplary embodiments of the present disclosure.
FIG. 13 is a perspective view of a tray according to exemplary embodiments of the present disclosure.
FIG. 14 is a diagram showing the tray of FIG. 12 coupled to the tray fixing member.
FIG. 15 is a diagram showing the tray and tray fixing member coupled according to another embodiment of the present disclosure.

### [Description of Reference Numerals]

1000: BATTERY CELL STORAGE DEVICE
100: RACK
110: POCKET
120: VERTICAL PARTITION WALL
130: ROTARY PLATE
140: TRAY FIXING MEMBER
141: FIRST TRAY FIXING MEMBER
142: SECOND TRAY FIXING MEMBER
200, 300: TRAY
210: BOTTOM PART
220: FIRST SIDE WALL
230: SECOND SIDE WALL
240: UPPER FRAME

### [Best Mode for Carrying out the Invention]

Hereinafter, a preferred embodiment of the present disclosure will be described in detail with reference to the accompanying drawings. Prior to this, the terms and words used in this specification and the claims shall not be interpreted as limited to their conventional or dictionary meanings. They shall be interpreted in accordance with the meaning and concepts consistent with the technical idea of the present disclosure, based on the principle that the inventor may appropriately define the concepts of the terms to describe his own disclosure in the best possible manner.

Therefore, the embodiments described herein and the configurations depicted in the drawings are merely preferred embodiments of the present disclosure and do not represent all possible technical ideas of the present disclosure. It should be understood that various equivalents and modifications may exist at the time of filing this application. Expressions in the singular herein include the plural unless the context clearly indicates otherwise.

Furthermore, in describing the present disclosure, detailed explanations of related prior art configurations or functions are omitted when such explanations are deemed likely to obscure the essence of the present disclosure.

The embodiments of the present disclosure are provided to more fully describe the present disclosure to those skilled in the art. Therefore, the shapes and sizes of components in the drawings may be exaggerated, omitted, or shown schematically for clearer explanation. Consequently, the size or proportions of each component do not necessarily reflect the actual size or proportions.

In this specification, the horizontal direction of the rack is defined as the first direction (Y-direction), the depth direction (X-direction) of the rack is defined as the second direction, and the vertical direction of the rack (Z-direction) is defined as the third direction.

### Battery Cell Storage Rack

As a first embodiment of the present disclosure, a storage rack for battery cells (hereinafter referred to as the 'rack') is provided.

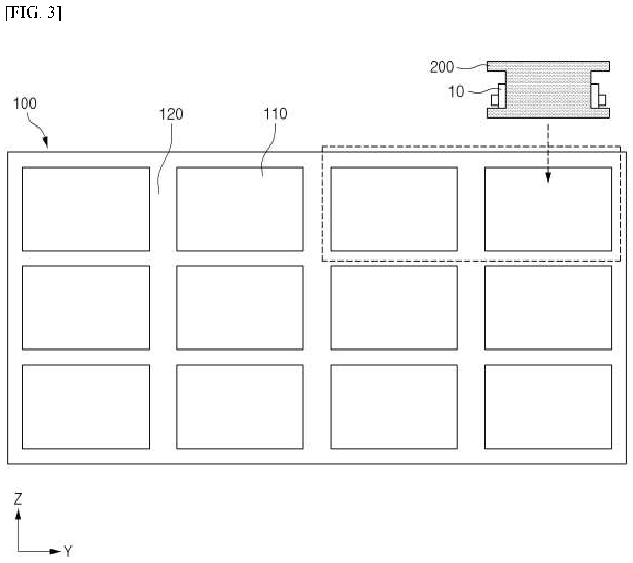

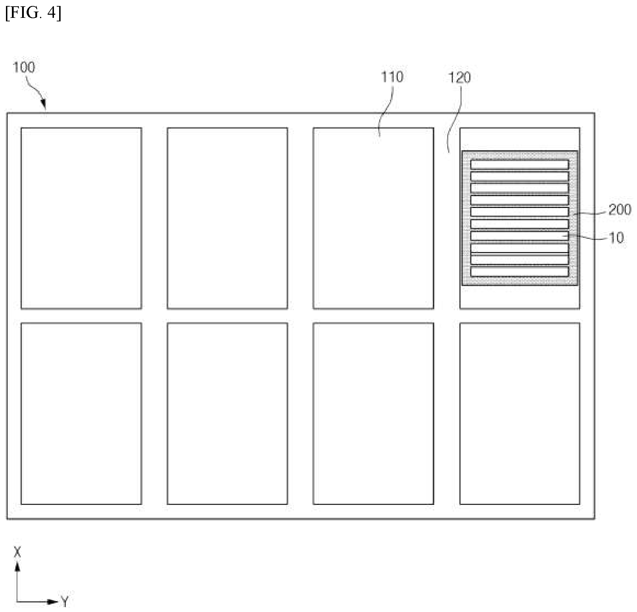

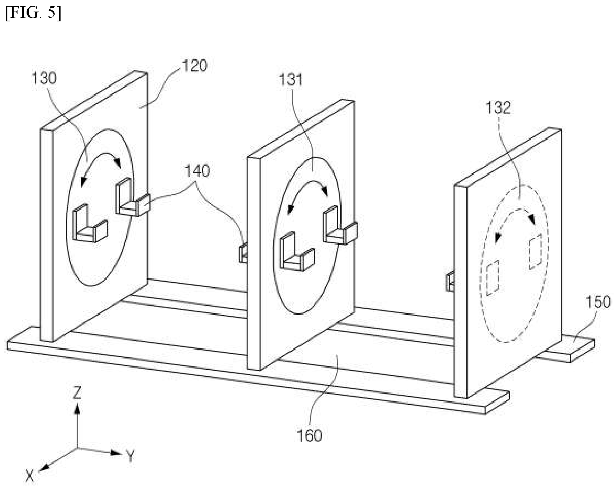

FIG. 3 is a front view of the rack according to exemplary embodiments of the present disclosure, FIG. 4 is a top view of the rack according to exemplary embodiments of the present disclosure, and FIG. 5 is an enlarged view of the pocket of the rack shown in FIG. 3.

Referring to FIGS. 3 through 5, the rack 100 according to exemplary embodiments of the present disclosure includes a plurality of pockets 110; a rotary plate 130; and a tray fixing member 140. The pocket 110 have vertical partition walls 120 formed therein. A single pocket 110 may have at least one pair of vertical partition walls 120. A tray 200 is stored within the interior space of the pocket 110.

The rack 100 is provided with a rotary plate 130 and a tray fixing member 140 to rotate the tray 200 while it is fixedly held inside. The rotary plate 130 is configured to rotate clockwise and/or counterclockwise, and the tray fixing member 140 is coupled to the rotary plate 130, wherein the tray fixing member 140 is configured to fix the tray 200, which is stored inside the pocket 110, to the rotary plate 130. The rotary plate 130 is installed on the vertical partition wall 120.

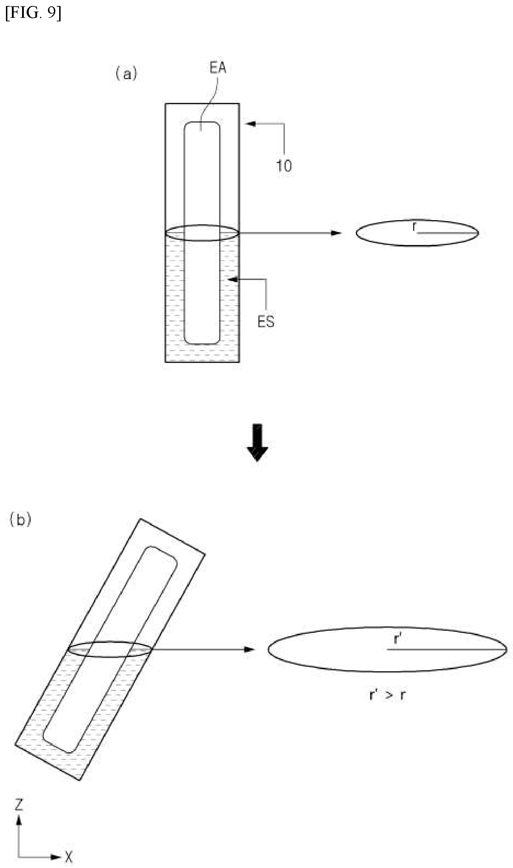

The rack 100 according to exemplary embodiments of the present disclosure enables the tray 200 stored within the pocket 110 to move along a circular trajectory in response to the rotation of the rotary plate 130, thereby allowing the battery cell 10 stored within the tray 200 to change from a horizontal state, as shown in FIG. 9, to an inclined state.

When the battery cell is tilted as shown in (b) of FIG. 9, compared to when the battery cell is in a horizontal state as shown in (a) of FIG. 9, the surface tension of the electrolyte solution (ES) decreases, thereby increasing the wetting efficiency of the electrolyte solution. Therefore, the rack 100 according to the present disclosure can shorten the time required for aging by improving the wetting efficiency of the electrolyte solution.

Referring to FIGS. 3 and 4, the rack 100 may have a structure where a plurality of pockets 110 is arranged along a first direction (Y-direction), a second direction (X-direction), and a third direction (Z-direction) to store a plurality of trays 200. However, the embodiment of the present disclosure is not limited to the form shown in FIG. 3. That is, the number of pockets 110 arranged along the first direction (Y-direction), or the second direction (X-direction), or the third direction (Z-direction) may be one.

Referring to FIGS. 4 and 5, each of the pockets 110 may be formed by a vertical partition wall 120 extending in the third direction (Z-direction) and a horizontal frame 150 extending in the first direction (Y-direction). At least one of the vertical partition walls 120 is spaced apart from each other along the first direction (Y-direction). The spacing distance between the vertical partition walls 120 may or may not be constant. At least one of the horizontal frames 150 is spaced apart from each other along the second direction (X-direction). The spacing between the horizontal frames 150 may or may not be constant. The spacing between the vertical partition walls 120 may correspond approximately to the length of the pocket 110 in the first direction (Y-direction). The spacing between the horizontal frames 150 may correspond approximately to the length of the pocket 110 in the second direction (X-direction).

The pocket 110 may have a structure with an open upper part and/or open lower part. The tray 200 can be stored and removed into/from the interior space of the pocket 110 through the open upper part and/or open lower part. Here, the upper part and lower part can be defined based on the third direction (Z-direction). In exemplary embodiments, to provide the pocket 110 with an open upper part structure, the horizontal frames 150 are spaced apart relative to the second direction (X-direction), allowing the pocket 110 to have an open part 160.

Referring to FIG. 5, in the exemplary embodiments, a pair of first and second rotary plates 131, 132 may be provided for each pocket 110. The first rotary plate 131 may be installed on one side of the vertical partition wall 120 based on the first direction (Y-direction), and the second rotary plate 132 may be installed on the other side of the vertical partition wall 120 based on the first direction (Y-direction). Accordingly, the first and second rotary plates 131, 132 face each other. The first and second rotary plates 131, 132 may be configured to rotate in a mutually linked manner.

The rotary plate 130 may be positioned at the center of the plane of the vertical partition wall 120. Here, the plane of the vertical partition wall 120 may be defined as the plane formed by the second direction (X-direction) and the third direction (Z-direction). The rotary plate 130 may be configured to rotate while coupled to the vertical partition wall 120. Furthermore, the rotary plate 130 may have a structure that is separable from the vertical partition wall 120. Accordingly, the rotary plate 130 can rotate freely, independently of the fixed vertical partition wall 120. In exemplary embodiments, the vertical partition wall 120 may be provided with a rotary plate accommodation groove (not shown) recessed inwardly in the thickness direction (Y-direction) of the vertical partition wall 120, and the rotary plate 130 may be insertable into the rotary plate accommodation groove.

The racks shown in FIGS. 3 to 5 illustrate an embodiment where a pair of tray fixing members 140 is provided on a single rotary plate 130, but the present disclosure is not limited thereto. When a pair or more tray fixing members 140 are provided on a single rotary plate 130, the plurality of tray fixing members 140 may be arranged spaced apart from each other along the second direction (X-direction), which is the depth direction of the rack. In such a case, with respect to the second direction (X-direction), one side and the other side of the tray 200 are each fixed to the rotary plate 130 by the tray fixing member 140, allowing the tray 200 to rotate stably in a balanced state during rotation of the rotary plate 130.

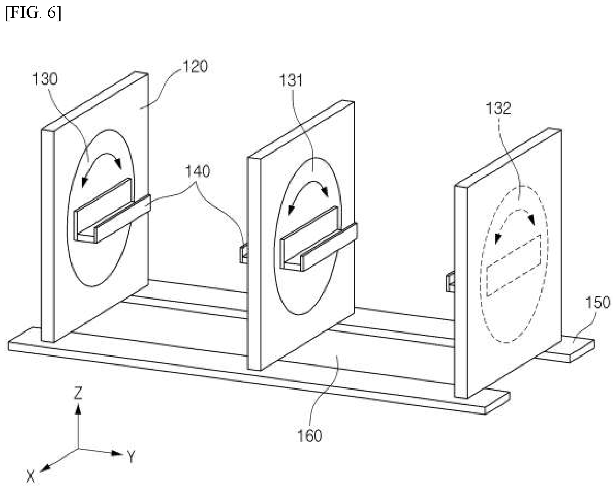

Referring to FIG. 6, a single tray fixing member 140 may be provided on a single rotary plate 130. As described above, the number, shape, and position of the tray fixing members 140 may be appropriately modified in design according to the configuration of the trays 200 stored in the rack 100.

In exemplary embodiments, the rotary plate 130 may be configured to be coupled to and separated from the vertical partition wall 120. The rotary plate 130 may be configured to be replaceable according to the specifications of the tray 200, with various models provided based on the number and position of the tray fixing members 140 coupled to the rotary plate 130.

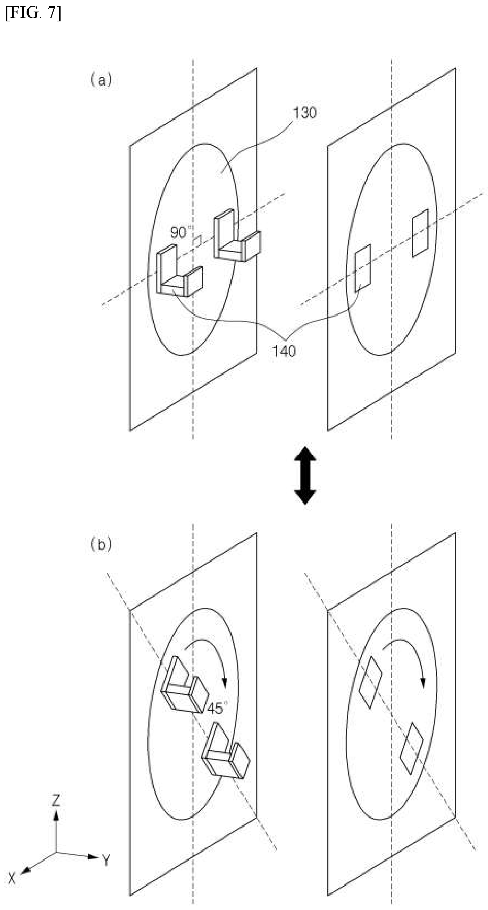

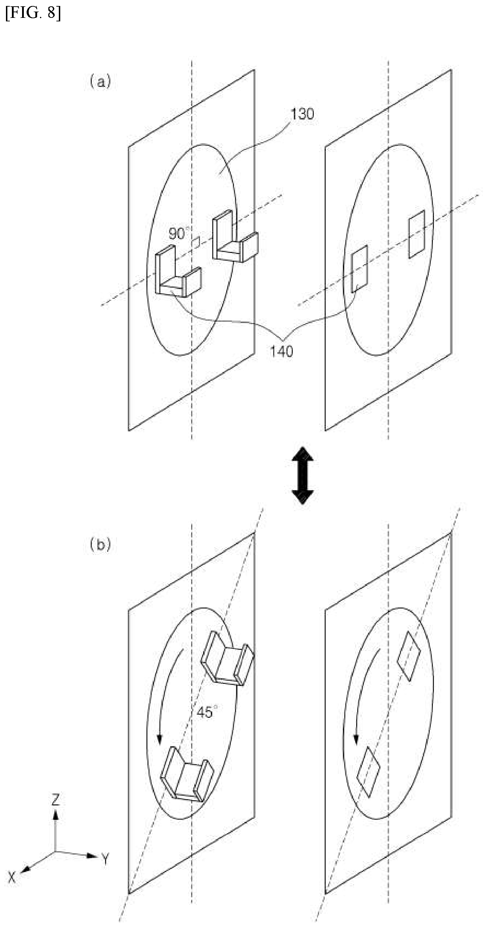

FIG. 7 is a diagram showing the rotary plate rotated clockwise, FIG. 8 is a diagram showing the rotary plate rotated counterclockwise, and FIG. 9 is a side view of a battery cell illustrating the effect of the present disclosure.

Referring to FIGS. 7 and 8, the rotational axis (not shown) of the rotary plate 130 may be parallel to the first direction (Y-direction), which is the horizontal direction of the rack. Therefore, when the rotary plate 130 rotates, the tray 200, which is connected to the rotary plate 130 by the tray fixing member 140, can rotate in an arc in the front/rear direction of the second direction (X-direction), which is the depth direction of the rack 100. Furthermore, the battery cell 10 stored in the tray can be converted from a horizontal state, as shown in (a) of FIG. 9, to an inclined state, as shown in (b) of FIG. 9.

Referring to FIG. 7, the rotary plate 130 can rotate clockwise by a predetermined angle (e.g., 45 degrees). The rotation angle of the rotary plate 130 is not particularly limited, provided it remains within a range where the battery cell 10 does not detach from the tray 200 during rotation. According to exemplary embodiments, the rotary plate 130 may be configured to rotate from the state shown in (a) of FIG. 7 to the state shown in (b) of FIG. 7, and then return from the state shown in (b) of FIG. 7 to the state shown in (a) of FIG. 7. It may also be configured to repeat rotation and return. Referring to FIG. 8, the rotary plate 130 may rotate counterclockwise by a predetermined angle (e.g., 45 degrees). Even in this case, the rotation angle of the rotary plate 130 is not subject to any particular restriction, and the rotary plate 130 may be configured to repeat rotation and return.

Referring to FIGS. 5 and 6, the tray fixing member 140 may be ring-shaped. Here, a ring shape refers to a shape designed to be hooked onto or attached to something, and there are no particular restrictions on its form. Furthermore, the tray 200 may be provided with an accommodation groove (not shown) into which the tray fixing member 140 can be inserted. Accordingly, the tray 200 can be forcibly fitted onto the ring-shaped tray fixing member 140 and fixed to the rotary plate 120.

In exemplary embodiments, the tray fixing member 140 may be positioned at a height allowing the tray 200 to rotate within the pocket 110. Here, height refers to the height measured from the bottom of the pocket 110 in the third direction (Z-direction). If the position where the tray fixing member 140 is coupled to the rotary plate 130 is too high or too low, the tray 200 may collide with the rack structure (e.g., horizontal frame) during rotation. Therefore, it is desirable for the tray fixing member 140 to be positioned at a height that allows the tray 200 to rotate within the pocket 110.

The battery cell storage rack according to exemplary embodiments of the present disclosure is configured to rotate the trays stored within the rack, thereby converting battery cells that were in a horizontal state into an inclined state due to the rotation of the trays. As the battery cells become inclined, the wetting efficiency of the electrolyte solution increases, ultimately reducing the time required for aging.

### Battery Cell Storage Device

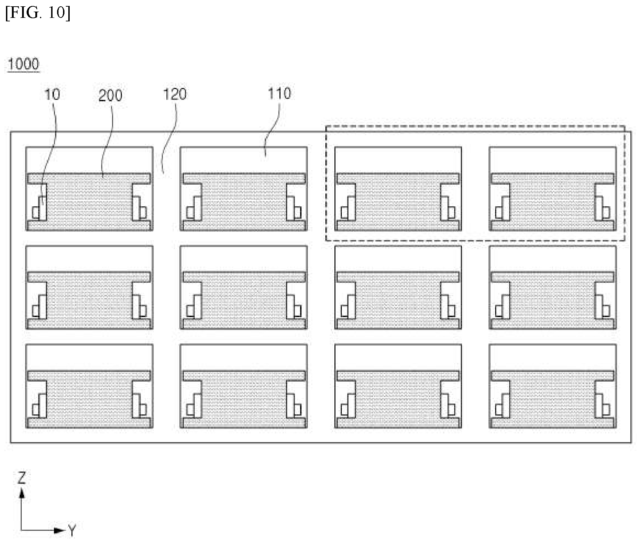

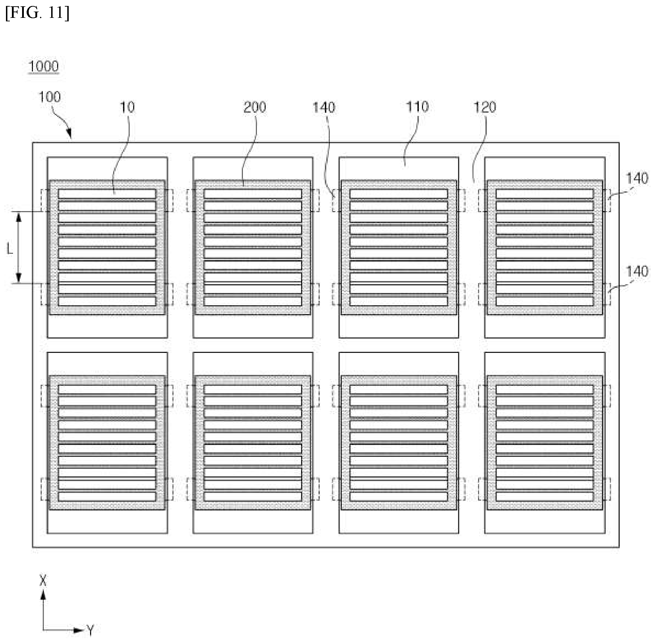

FIG. 10 is a front view of a battery cell storage device according to exemplary embodiments of the present disclosure, and FIG. 11 is a top view of the battery cell storage device (hereinafter referred to as the 'storage device') according to exemplary embodiments of the present disclosure.

Referring thereto, the storage device 1000 according to exemplary embodiments of the present disclosure includes a tray 200 and a rack 100.

The rack 100 may be the rack described earlier.

For example, the rack 100 may be for loading the tray 200, including: a plurality of pockets 110 having vertical partition walls 120; a rotary plate 130 configured to rotate clockwise and/or counterclockwise; and a tray fixing member 140 configured to fix the tray 200 which is coupled to the rotary plate 130 and stored inside the pocket 110; wherein the rotary plate 130 may be installed on the vertical partition wall 120.

In exemplary embodiments, the pocket 110 may have a structure in which the upper part and/or the lower part is open. Accordingly, the tray 200 can be easily stored and removed into the interior space of the pocket 110 through the open upper part and/or open lower part of the pocket 110.

In exemplary embodiments, the rotational axis of the rotary plate 130 is parallel to the first direction (Y-direction) of the rack 100.

In exemplary embodiments, each pocket 110 is provided with a pair of first and second rotary plates 131, 132, wherein the first rotary plate 131 is installed on the vertical partition wall 120 on one side of the first direction (Y-direction), and the second rotary plate 132 is installed on the vertical partition wall 120 on the other side of the first direction (Y-direction).
In exemplary embodiments, the tray fixing member 140 may be ring-shaped. The tray 200 may have an accommodation groove (not shown) into which the tray fixing member 140 can be inserted. Accordingly, the tray 200 can be forcibly fitted onto the ring-shaped tray fixing member 140 and fixed to the rotary plate 130.

In exemplary embodiments, the rotary plate 130 is configured to rotate while coupled to the vertical partition wall 120. Consequently, the rotary plate 130 can freely rotate independently of the vertical partition wall 120 to which it is fixed.

In exemplary embodiments, the rotary plate 130 may be configured to be coupled to the vertical partition wall 120 and separable from the vertical partition wall 120. Accordingly, the rotary plate 130 may be provided in various models depending on the number and position of the tray fixing members 140 coupled to the rotary plate 130, and may be replaceable according to the specifications of the tray 200.

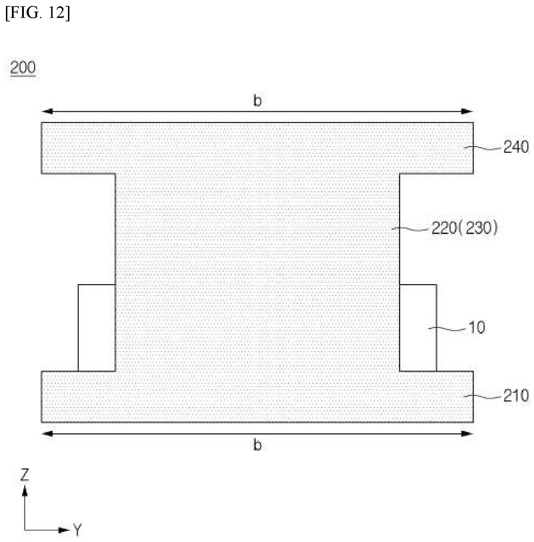

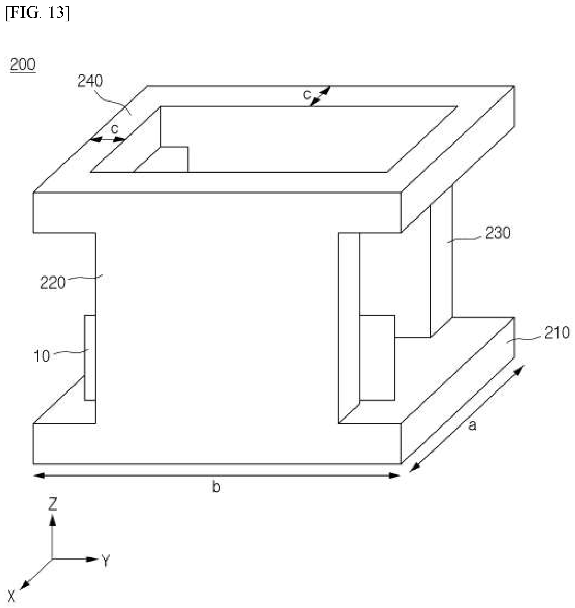

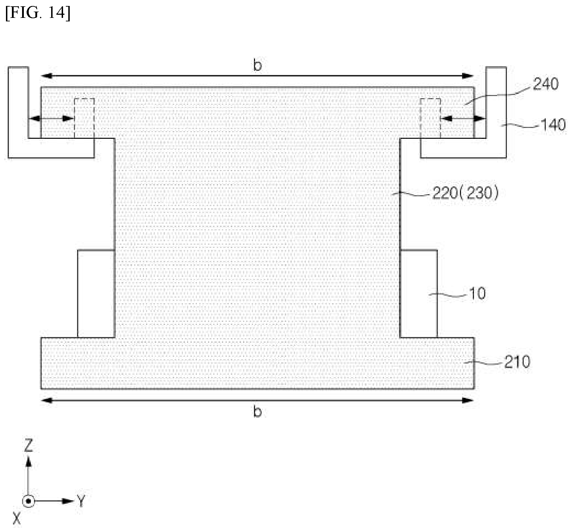

FIG. 12 is a front view of the tray 200 according to exemplary embodiments of the present disclosure. FIG. 13 is a perspective view of the tray 200 according to exemplary embodiments of the present disclosure. FIG. 14 is a diagram showing the tray 200 of FIG. 12 coupled to the tray fixing member 140.

Referring to FIGS. 12 and 13, the tray 200 includes a bottom part 210; first and second side walls 220, 230; and an upper frame 240. The bottom part 210, first and second side walls 220, 230, and upper frame 240 may be formed integrally or may be formed as separate components coupled together.

The bottom part 210 serves as a location where one or more battery cells 10 are mounted and may be plate-shaped. A battery cell accommodation groove (not shown) for accommodating the battery cell 10 may be formed on the upper surface of the bottom part 210. A plurality of battery cells 10 may be arranged to stand upright and be aligned parallel to each other along a second direction (X-direction).

The first and second side walls 220, 230 are perpendicular to the bottom part 210 and face each other. The sides of the tray other than the first and second side walls 220, 230 may be open. That is, when viewing the tray 200 with the battery cells 10 stored therein from the front, both ends of the battery cells 10 in the width direction (Y-direction) may be visible through the open side parts of the tray 200.

The upper frame 240 is positioned at the upper part of the first and second side walls 220, 230 and may have a frame-like shape with an open center. The upper frame 240 faces the bottom part 210 with the first and second side walls 220, 230 interposed therebetween.

Referring to FIGS. 13 and 14, the tray fixing member 140 may be ring-shaped, and the upper frame 240 may have an accommodation groove (not shown) into which the tray fixing member 140 can be inserted. The ring-shaped tray fixing member 140 can be forcibly fitted into the accommodation groove of the upper frame 240. The accommodation groove can be formed extending along a second direction (X-direction). The upper frame 240 may have a frame shape with a predetermined width direction length (c), and a pair of the second direction (X-direction) sides among the four sides of the upper frame 240 may be configured to be fastened to a plurality of ring-shaped tray fixing members 140. Accordingly, the tray 200 can be fixed to the rotary plate 130 by the tray fixing member 140.

Meanwhile, when the tray fixing members 140 are spaced apart along the depth direction (X-direction) of the rack, the mutual spacing distance (L) of the tray fixing members 140 in the depth direction (X-direction) may correspond to a length equal to the tray 200 depth direction (X-direction) length (a) minus twice the width direction length (c) of the upper frame 240 (=a-2c). Consequently, during rotation of the rotary plate, both sides of the tray relative to the depth direction of the rack can be stably maintained in a fixed state on the rotary plate by the tray fixing members.

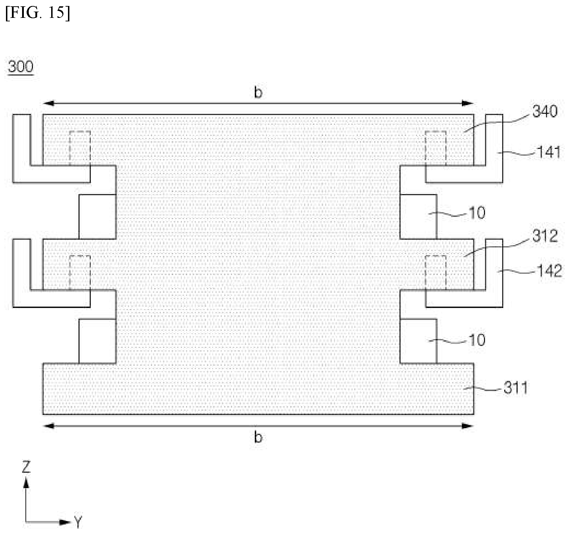

FIG. 15 is a diagram showing the coupling of a tray and tray fixing member according to another embodiment of the present disclosure.

Referring to FIG. 15, the tray 300 according to another embodiment is configured to stack the battery cells 10 in a plurality of layers along a third direction (Z-direction). That is, unlike the tray 200 shown in FIGS. 12 through 14, it comprises a first bottom part 311 and a second bottom part 312, with the first bottom part 311 and the second bottom part 312 positioned sequentially along the vertical direction (Z-direction). In this case, to ensure the tray 300 is stably fixed to the rack 100, the tray fixing members 141, 142 may also be disposed vertically (in the Z-direction) up/down on the rotary plate (not shown).

Referring to FIG. 15, the tray fixing members may include a first tray fixing member 141 and a second tray fixing member 142, which are disposed spaced apart from each other along the third direction (Z-direction). The first tray fixing member 141 may be fastened to the upper frame 340, and the second tray fixing member 142 may be fastened to the second bottom part 312. Provided the second bottom part 312 has a structure capable of being fastened to the tray fixing members, there are no particular restrictions on its shape or fastening method. In some embodiments, the leading end of the second bottom part 312 may have a structure corresponding to the shape of the ring-shaped second tray fixing member 142, allowing the second tray fixing member 142 to be inserted. In another embodiment, the lower surface of the second bottom part 312 may include a fastening groove (not shown) for insertion of the leading end of the tray fixing member 140. In the exemplary embodiments described above, the tray fixing member may be configured to be fastened to the upper frame and/or the bottom part.

The battery cell storage device according to the exemplary embodiments of the present disclosure is configured to rotate a tray stored in a rack, thereby converting battery cells that were in a horizontal state into an inclined state due to the rotation of the tray. As the battery cells become inclined, the wetting efficiency of the electrolyte solution increases, ultimately reducing the time required for aging.

The present disclosure has been described in more detail above with reference to the drawings and embodiments. However, it should be understood that the configurations described in the drawings or embodiments are only one embodiment of the disclosure and do not represent all of the technical ideas of the disclosure, and that there may be various equivalents and modifications that may be substituted for them at the time of filing the present application.

## Claims

1. A rack for loading battery cell trays, comprising:
a plurality of pockets provided with vertical partition walls;
a rotary plate configured to rotate clockwise and/or counterclockwise; and
a tray fixing member coupled to the rotary plate and configured to fix a tray stored within the pocket, wherein
the rotary plate is installed on the vertical partition wall.

2. The rack of claim 1, wherein
the rotational axis of the rotary plate is parallel to a first direction (Y-direction).

3. The rack of claim 1, wherein
each pocket is provided with a pair of first and second rotary plates, wherein
the first rotary plate is installed on a vertical partition wall on one side of a first direction (Y-direction), and the second rotary plate is installed on a vertical partition wall on the other side of the first direction (Y-direction).

4. The rack of claim 1, wherein
the tray fixing member is ring-shaped.

5. The rack of claim 1, wherein
the rotary plate is configured to be able to be coupled to the vertical partition wall and separable from the vertical partition wall.

6. The rack of claim 1, wherein
a plurality of tray fixing members is provided on a single rotary plate, wherein
the plurality of tray fixing members is spaced apart from each other along a second direction (X-direction).

7. The rack of claim 1, wherein
the pocket has a structure in which the upper part and/or lower part is open.

8. The rack of claim 1, wherein
the tray fixing member is positioned at a height allowing the tray to rotate within the pocket.

9. A battery cell storage device comprising:
a tray configured to store a battery cell; and
a rack for loading the tray, wherein
the rack comprises:
a plurality of pockets formed with vertical partition walls;
a rotary plate configured to rotate clockwise and/or counterclockwise; and
a tray fixing member coupled to the rotary plate and configured to fix the tray stored inside the pocket, wherein
the rotary plate is installed on the vertical partition walls.

10. The battery cell storage device of claim 9, wherein
the tray comprises:
a bottom part;
first and second side walls perpendicular to the bottom part and facing each other; and
an upper frame located at the upper part of the first and second side walls and having a frame shape with an open center.

11. The battery cell storage device of claim 10, wherein
the tray fixing member is configured to be fastened to the upper frame and/or the bottom part.

12. The battery cell storage device of claim 9, wherein
the rotational axis of the rotary plate is parallel to a first direction (Y-direction).

13. The battery cell storage device of claim 9, wherein
each pocket is provided with a pair of first and second rotary plates, wherein
the first rotary plate is installed on a vertical partition wall on one side of a first direction (Y-direction), and the second rotary plate is installed on a vertical partition wall on the other side of the first direction.

14. The battery cell storage device of claim 9, wherein
the tray fixing member is ring-shaped.

15. The battery cell storage device of claim 9, wherein
the rotary plate is configured to be able to be coupled to the vertical partition wall and separable from the vertical partition wall.

16. The battery cell storage device of claim 9, wherein
the pocket has a structure in which the upper part and/or lower part is open.
